(19) Europäisches Patentamt
European Patent Office
Office européen des brevets

(11) **EP 4 001 350 A1**

(12) **EUROPEAN PATENT APPLICATION**
published in accordance with Art. 153(4) EPC

(43) Date of publication:
**25.05.2022 Bulletin 2022/21**

(21) Application number: **20840552.2**

(22) Date of filing: **17.07.2020**

(51) International Patent Classification (IPC):
*C08J 9/00* (2006.01)     *C08L 61/28* (2006.01)
*C08K 5/1539* (2006.01)     *C08G 12/26* (2006.01)

(52) Cooperative Patent Classification (CPC):
**C08G 12/26; C08J 9/00; C08K 5/1539; C08L 61/28**

(86) International application number:
**PCT/KR2020/009481**

(87) International publication number:
**WO 2021/010802 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.07.2019 KR 20190086196**

(71) Applicant: **Dongsung Chemical Co., Ltd.
Busan 49421 (KR)**

(72) Inventors:
• **SEO, Pan Seok
Busan 49470 (KR)**

• **PARK, Young Do
Busan 49470 (KR)**
• **GWACK, Byung Youn
Busan 49470 (KR)**
• **KIM, Sung Hun
Busan 49470 (KR)**
• **CHOI, Gak Gyu
Busan 49470 (KR)**

(74) Representative: **Eisenführ Speiser
Patentanwälte Rechtsanwälte PartGmbB
Postfach 10 60 78
28060 Bremen (DE)**

(54) **THERMOFORMABLE MELAMINE FOAM AND METHOD FOR MANUFACTURING SAME**

(57)     The present invention provides a thermoformable melamine foam and a method for preparing the same, wherein the thermoformable melamine foam comprises a condensate of a melamine-formaldehyde-based compound with a low molecular ratio to be low in formaldehyde content and shows excellent thermostability and various physical properties.

FIG. 1

EP 4 001 350 A1

**Description**

[TECHNICAL FIELD]

The present invention provides a thermoformable melamine foam and a method for preparing the same, the thermoformable melamine foam including a melamine-formaldehyde-based compound condensate having a low mole ratio, thereby having a low content of formaldehyde emission and exhibiting excellent heat resistance and general physical properties.

[DISCUSSION OF RELATED ART]

Melamine foam is a product formed by foaming a melamine-formaldehyde condensate produced by a reaction of the melamine and the formaldehyde. In order to secure appropriate physical properties of the melamine foam, a mole ratio of the melamine and the formaldehyde should be in a range of 1: 2.5 to 3.5. However, when the mole ratio of the formaldehyde is high, there is a problem in that an amount of the formaldehyde emitted from the foam increases.
Meanwhile, in order to remove the formaldehyde, heat treatment should be performed at a high temperature, but there is a problem in that thermoforming is not possible when the heat treatment is completely performed. Specifically, there are three cases of formaldehyde emitted from melamine foams. The first is unreacted formaldehyde. The second is a formaldehyde gas emitted by a reverse reaction of methylol melamine, which is emitted at about 150°C. Finally, the third is formaldehyde emitted as the chemical structure changes from an ether bridge to a methylene bridge, which is removable by heat treatment at about 200°C. Among them, the most problematic part is the unreacted formaldehyde and the formaldehyde emitted as it is generated from a methylene bridge.
In order to solve the above problems, it is necessary to reduce the mole ratio of formaldehyde, but when the mole ratio of formaldehyde is reduced, melamine may not be completely dissolved when preparing of the melamine-formaldehyde condensate, and there is also a problem in that the heat resistance and the physical properties are also reduced.

[DETAILED DESCRIPTION OF THE INVENTION]

[TECHNICAL CHALLENGES]

The present invention has been devised to solve the above problems, and when preparing a condensate of melamine and a formaldehyde-based compound, it is classified into a two-step process while adjusting a solid content for each process to a predetermined range, thereby providing a melamine foam and a method for preparing the same in which the problem of melamine dissolution may be dissolved under a low mole ratio condition and a reduced amount of formaldehyde emission and excellent heat resistance may be achieved.

[TECHNICAL SOLUTION TO THE PROBLEM]

According to an embodiment, a thermoformable melamine foam includes: a melamine-formaldehyde-based compound condensate, wherein a content of the formaldehyde is less than 460 mg/kg, a tensile strength before aging measured according to KS M 6518 is 55 kPa or more, and a tensile strength retention rate after aging measured after drying at 260°C for 5 hours is 15 % or more, and an elongation rate measured according to KS M 6518 is 20 % or more.
In some embodiments, a mole ratio of the melamine and the formaldehyde-based compound in the condensate may be in a range of 1 : 1.3 to 1.8, and a solid content of the condensate is in a range of 70 to 80 wt%.
In some embodiments, the thermoformable melamine foam may further include isosorbide.
In some embodiments, the isosorbide may be dispersed in the melamine-formaldehyde-based compound condensate.
In some embodiments, a content of the isosorbide may be in a range of 0.5 to 10 parts by weight with respect to a total weight of the condensate.
In some embodiments, the foam may have a tensile strength retention rate after aging of more than 20 % and 85 % or less measured according to KS M 6518 after drying at 260°C for 5 hours.
In some embodiments, the formaldehyde-based compound may include at least one of formalin, paraformaldehyde, 1,3,5-trioxane, 1,3,5,7-tetroxocan, an oligomeric formaldehyde thereof and a polymeric formaldehyde thereof.
According to an embodiment, a method of preparing the thermoformable melamine foam includes: (a) a first step of preparing a mixture having a solid content adjusted to a range of 30 to 50 wt% by mixing melamine, a formaldehyde-based compound and water; (b) a second step of preparing a melamine-formaldehyde condensate having a solid content adjusted to a range of 70 to 80 wt% by adding a basic catalyst to the mixture and then removing water; and (c) a third step of forming a melamine foam by foaming and curing the melamine-formaldehyde condensate; and a dispersed solution to which at least one of a condensing agent, an emulsifier, a foaming agent and a curing agent is added.

In some embodiments, the dispersed solution in the step (c) may include isosorbide.

In some embodiments, the isosorbide may be added in an amount ranging from 0.5 to 10 parts by weight with respect to a total weight of the condensate.

According to an embodiment, a thermoformable melamine foam includes: a melamine-formaldehyde-based compound condensate; and isosorbide.

In some embodiments, a tensile strength before aging measured according to KS M 6518 may be 55 kPa or more, and a tensile strength retention rate after aging measured after drying at 260°C for 5 hours may be more than 20 % and 85 % or less.

[EFFECTS OF THE INVENTION]

According to embodiments of the present invention, due to a low mole ratio, an effect of reducing a content of formaldehyde may be achieved, and the conventional dissolution problem of melamine may be dissolved, thereby securing excellent heat resistance and general properties as a foam.

Accordingly, the melamine foam of the present invention may be applied as a sound-absorbing material for an engine room of an automobile, a material having various properties such as lightweight and excellent sound-absorbing properties in the interior, and may be applied to various fields with excellent sound-absorbing and heat-resistant properties.

The effect according to the present invention is not limited by the descriptions exemplified above, and more various effects are included in the present specification.

[BRIEF DESCRIPTION OF DRAWINGS]

FIG. 1 is a graph illustrating changes in heat resistance of a melamine foam according to an input amount of isosorbide.
FIG. 2 is a photograph illustrating a mold used for evaluation of crack characteristics of the melamine foam according to an embodiment of the present invention.

[MODES FOR CARRYING OUT THE INVENTION]

Hereinafter, the present invention will be described in detail. However, it is not limited only by the following description, and each element may be variously modified or selectively mixed as needed. Therefore, it should be understood to include all modifications, equivalents and substitutes included in the spirit and scope of the present invention.

All terms (including technical and scientific terms) used in this specification, unless otherwise defined, may be used in the meaning commonly understood by those of ordinary skill in the art to which the present invention pertains. In addition, terms defined in a commonly used dictionary are not to be interpreted ideally or excessively unless clearly defined in particular.

In addition, throughout this specification, when a part "includes" a certain element, it means that other elements may be further included, rather than excluding other elements, unless otherwise stated. In addition, throughout the specification, "above" or "on" means not only when it is located above or under the target part, but also includes the case where there is another part in the middle, and it does not mean that it is positioned above with respect to the direction of gravity.

A melamine-formaldehyde resin is a thermosetting resin obtained by a condensation reaction of melamine and formaldehyde. Nucleophilic addition of melamine to formaldehyde forms a dimethyl derivative including an amino group, and in practice, a prepolymer in which monomethylol includes a substituted amino group is formed, and condensation occurs between methylol and the amino group, thereby forming a methylene bond bridge to be cured. In an aqueous reaction mixture, insoluble melamine is completely dissolved with condensation as the reaction proceeds.

In the present invention, a mole ratio of melamine and a formaldehyde-based compound is adjusted to be lower than that of the prior art (e.g., 1: 2.5 to 3.5) in order to prepare a melamine foam that may be thermoformed with a small content of formaldehyde and has excellent heat resistance. In such a case, in order to prepare a melamine foam having optimal physical properties, when a melamine-formaldehyde-based compound condensate has a solid content of 70 wt%, a problem in which melamine is not completely dissolved occurs.

In order to solve the above problems, in the present invention, the mole ratio of the melamine and the formaldehyde-based compound is adjusted to be lower than that of the prior art, while producing of the melamine-formaldehyde-based compound condensate is classified into a first step (specifically, a melamine dissolution step) and a second step (specifically, a condensate producing step), and a solid content in each of the first and second steps is adjusted to a predetermined range to prepare the condensate.

Conventional melamine foams have excellent physical properties, but are not well thermoformed. On the other hand, the melamine foam of the present invention prepared from a condensate having a lower mole ratio than that of a conventional melamine-formaldehyde condensate exhibits a reduced formaldehyde content as well as excellent thermoforming properties and properties required as a sound absorbing material for automobiles.

<Thermoformable melamine foam>

A thermoformable melamine foam according to the present invention includes a melamine-formaldehyde-based compound condensate or cocondensate having a low mole ratio and a predetermined solid content.

As the melamine, conventional melamine-based compounds and derivatives thereof known in the art may be used without limitation. In an embodiment, the melamine-based compound also includes a mixture of the melamine compound and other materials. For example, it may be melamine, methylolmelamine, alkylated methylolmelamine, which is an alkylate thereof, or a mixture thereof. In addition, the melamine may include a modified melamine such as methylated methylol melamine, propylated methylol melamine, butylated methylol melamine, and isobutylated methylol melamine, and a modified melamine such as melamine (meth) acrylate may also be included.

In the present invention, melamine is mainly described, but other than the melamine, using a conventional amino resin corresponding to an equivalent of melamine also falls within the scope of the present invention. Examples of the amino resin include one or more of urea, urea derivatives, guanamine, benzoguanamine, urethane, carboxyamide, dicyandiamide, sulfonamide, aliphatic amine, glycol, hydroquinone, resorcinol, aniline, xerol, phenol and its derivatives.

The formaldehyde-based compound may be in the form of an aqueous solution or a compound that provides formaldehyde during reaction. Non-limiting examples of applicable formaldehyde-based compounds may be selected from, for example, formalin, paraformaldehyde, 1,3,5-trioxane, 1,3,5,7-tetroxocane, an oligomeric formaldehyde thereof or a polymeric formaldehyde thereof. The above-mentioned compounds may be used alone or in combination of two or more.

In such a case, in the present invention, in order to achieve the effect of reducing the content of formaldehyde in the thermoformable melamine foam and solve the dissolution problem of conventional melamine, it is adjusted to have a lower mole ratio and a predetermined solid content compared to the conventional melamine-formaldehyde condensate.

In an embodiment of the present invention, in the melamine-formaldehyde-based compound condensate, the mole ratio of the melamine and the formaldehyde-based compound may be in a range of 1:1.3 to 1.8. Specifically, it may be 1: 1.3 to 1.7, more specifically 1: 1.3 to 1.6. If the mole ratio is out of the above range, an amount of formaldehyde included in the foam may be too large or basic physical properties of the foam may not be retained.

In another embodiment of the present invention, a solid content of the melamine-formaldehyde-based compound condensate may be in a range of 70 to 80 wt%. When the solid content in the condensate of the thermoformable melamine-formaldehyde-based compound is less than 70 wt%, the basic physical properties of the melamine foam are much lowered, making it difficult to use, and when it is more than 80 wt%, tearing occurs in the area with severe curvature during the thermoforming process of various types.

The melamine foam of the present invention described above may exhibit excellent physical properties as a foam while exhibiting a formaldehyde reduction effect due to a low mole ratio. The general physical properties of these foams may be confirmed through crack characteristics, tensile strength and elongation, and the like (see Tables 1 and 2 below).

In an embodiment, the thermoformable melamine foam may have a formaldehyde content of less than 460 mg/kg, preferably less than 450 mg/kg.

For another embodiment, the thermoformable melamine foam may have a tensile strength of 55 kPa or more, preferably 57 to 150 kPa, measured according to KS M 6518. In addition, a tensile strength retention rate after aging measured after drying at 260°C for 5 hours is 15 % or more, and may specifically be in a range of 15 to 85 %.

In another embodiment, the thermoformable melamine foam may have an elongation measured according to KS M 6518 of 20 % or more, and more specifically 20 to 80 %.

In a case of a melamine foam having a lower mole ratio than in the prior art, there may be a problem in that thermal performance of the foam itself is lowered due to a low degree of crosslinking. To this end, in the present invention, isosorbide, which has excellent compatibility with the melamine-formaldehyde-based compound condensate and may act as an antioxidant, is used.

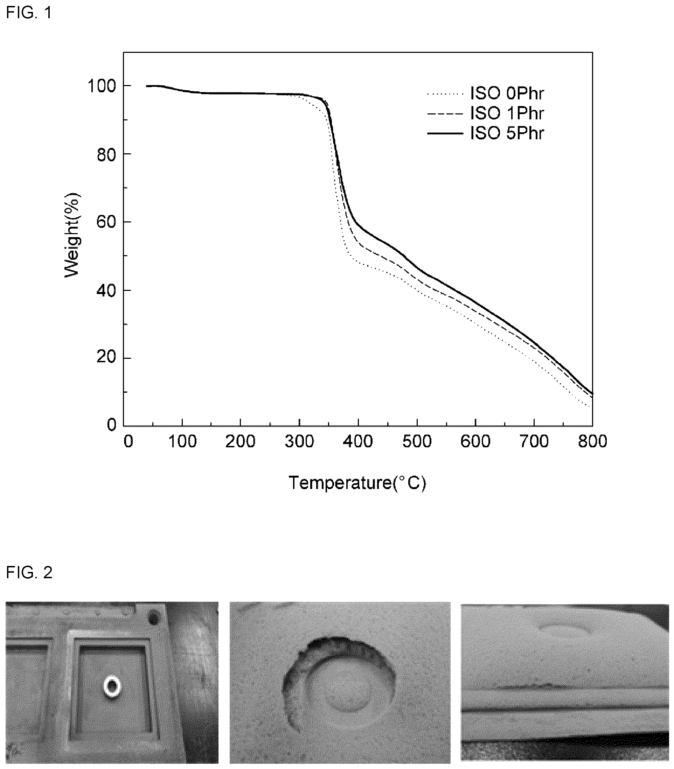

That is, conventional antioxidants are not easily dispersed in the melamine-formaldehyde-based compound condensate due to low hydrophilicity, and thus the antioxidant effect is not greatly exhibited. In contrast, the isosorbide adopted in the present invention has very high hydrophilicity, so it is easy to disperse in the melamine-formaldehyde-based compound condensate. In addition, as a result of evaluating thermogravimetric analysis and thermal aging performance, it may be appreciated that excellent heat resistance improvement properties are exhibited (see Tables 1 and 3 and FIG. 1 below).

Isosorbide is a bicyclic compound obtained from a diol and an oxygen-including heterocyclic compound having two fused furan rings. In the present invention, it is also within the scope of the present invention to use isosorbide-based derivative compounds obtained from the above structures as well as isosorbide.

Since such isosorbide has high hydrophilicity and excellent compatibility, it may be uniformly dispersed in the melamine-formaldehyde-based compound condensate. As such, the isosorbide present in the condensate is dispersed in the foam, and when radicals are generated by thermal aging, it may act as a radical scavenger to exhibit excellent heat resistance. In addition, isosorbide may be chemically bonded to the condensate to form a copolymer bond within a molecular structure of the foam.

A content of isosorbide is not particularly limited, and for example, may be 0.5 to 10 parts by weight with respect to the total weight (e.g., 100 parts by weight) of the melamine-formaldehyde-based compound condensate. Specifically, it may be 1 to 8 parts by weight, more specifically 1 to 5 parts by weight.

In particular, in the present invention, by further including isosorbide in the melamine-formaldehyde-based compound condensate having a low mole ratio, a synergy effect in terms of heat resistance, specifically, tensile strength retention after heat aging, may be exhibited.

In an embodiment, the thermoformable melamine foam of the present invention including isosorbide has a tensile strength retention rate after heat aging measured according to KS M 6518 after drying at 260°C for 5 hours exceeds 20 %, specifically 35 % or more, more specifically in a range of 50 % to 85 %. In such a case, the above-described tensile strength retention after heat aging is based on a case where the mole ratio of melamine and formaldehyde is 1 : 2.3, and when the mole ratio is changed, the numerical value of the tensile strength retention may also be changed.

<Method for preparing thermoformable melamine foam>

Hereinafter, a method for preparing a thermoformed melamine foam according to the present invention will be described. Such a foam may be prepared without limitation according to a conventional method known in the art, and for example, it may be prepared by the following method. However, the present invention is not limited only by the methods exemplified below, and steps of each process may be modified or selectively mixed as needed.

As an embodiment of the method for preparing the thermoformable melamine foam may include: (a) a first step (step S10) of preparing a mixture having a solid content adjusted to a range of 30 to 50 wt% by mixing melamine, a formaldehyde-based compound and water; (b) a second step (step S20) of preparing a melamine-formaldehyde condensate having a solid content adjusted to a range of 70 to 80 wt% by adding a basic catalyst to the mixture and then removing water; and (c) a third step (step S30) of forming a melamine foam by foaming and curing a dispersed solution in which the melamine-formaldehyde condensate; and at least one of a condensing agent, an emulsifier, a foaming agent and a curing agent is added.

Hereinafter, the preparing method is classified into each process step and described as follows.

(a) Melamine dissolution step (hereinafter, referred to as 'S10 step')

In step S10, a mixture is prepared by mixing melamine, a formaldehyde-based compound, and water, where a mixture having a predetermined solid content while melamine is completely dissolved is prepared.

In the present invention, in order to solve the dissolution problem of melamine by the low mole ratio while optimally adjusting the final solid content of the condensate, the step of producing the melamine-formaldehyde-based compound condensate is classified into two steps of the melamine dissolution step (step S10) and the condensate producing step (step S20), where after primarily adjusting the solid content of the mixture in the step S10, it is secondarily adjusted to the solid content capable of exhibiting appropriate physical properties in the final resin in the Step S20.

A composition of the mixture for forming the melamine foam for preparing the condensate is not particularly limited, and the mole ratio of the melamine and the formaldehyde-based compound may be adjusted to be 1: 1.3 to 1.8. Specifically, it may be 1:1.3 to 1.7, and more specifically 1:1.3 to 1.6.

In addition, the amount of water used is also not particularly limited, and while the melamine is completely dissolved, it may be appropriately adjusted within a range having a primary solid content to be described later.

The solid content of the mixture prepared in step S10 is not particularly limited as long as the melamine may be completely dissolved, and may be, for example, 30 to 50 wt%. Such a mixture may be at room temperature or heated to a predetermined temperature. When the mixture is heated to approximately 50-85°C, specifically 70-80°C, solubility increases so that melamine may be completely dissolved.

(b) Step of preparing condensate for melamine foam (hereinafter, referred to as 'Step S20')

In the step S20, a melamine-formaldehyde-based compound condensate for forming a melamine foam is prepared.

Specifically, after adding a basic catalyst to the mixture (solid content: 30 to 50 wt%) in which melamine is completely dissolved in step S10, a predetermined amount of water is removed at a pressure of about 700 to 750 mmHg and the reaction is terminated, so that a condensate in which a solid content is adjusted to 70 to 80 wt% is prepared.

As the basic catalyst, a basic material known in the art may be used without limitation, for example, an aqueous sodium hydroxide solution may be used.

The copolymerization condensation reaction performed in the present invention may be performed according to a conventional method (see, for example, European Patent Publication No. 355,760, Houben-Weyl, vol. 14/2, p. 357 and later). Herein, the polycondensation reaction conditions are not particularly limited, and for example, the polycondensation reaction may be performed within a range of a reaction temperature of 80 to 200°C, a reaction pressure of 100 to 500 kPa, and a pH of 6 to 10, and accordingly, a melamine-formaldehyde-based compound condensate of the present invention may be obtained.

The condensate produced in step S20 may have a solid content of 70 to 80 wt%, a viscosity of 100 to 30,000 cPs, and a pH of 6 to 10. However, it is not particularly limited thereto.

The viscosity may be measured according to a conventional method at a temperature of 30°C using a Brookfield viscometer, and the pH may be measured according to a conventional method using a pH meter at a temperature of 30±5°C.

(c) Melamine foam forming step (hereinafter, referred to as Step S30)

In the step S30, at least one of a condensing agent, an emulsifier, a foaming agent and a curing agent is added to the condensate obtained in step S20 to foam the dispersed dispersion to form a foam.

In the present invention, in order to improve the heat resistance of the thermoformable melamine foam, a predetermined amount of isosorbide is added to the dispersion. The amount of isosorbide added may be 0.5 to 10 parts by weight, specifically 1 to 8 parts by weight, more specifically 1 to 5 parts by weight with respect to the total weight (e.g., 100 parts by weight) of the melamine-formaldehyde-based compound condensate.

In an embodiment, the dispersed solution in step S30 is not particularly limited, and for example, may include 0.2 to 10 parts by weight of a condensing agent, 0.5 to 10 parts by weight of an emulsifier, 0.5 to 20 parts by weight of a foaming agent and 0.2 to 10 parts by weight of a curing agent with respect to 100 parts by weight of the condensate.

The condensing agent may include any conventional condensing agent known in the art without limitation, for example, at least one of sodium bisulfite, ammonium sulfamate or sodium formate. In addition, an amount of the condensing agent added may be 0.2 to 10 parts by weight, preferably 1 to 5 parts by weight, with respect to 100 parts by weight of the condensate. When the amount of the condensing agent added is less than 0.2 parts by weight, a sufficient polycondensation reaction may not be performed, such that a cell density decreases after foam formation, thereby reducing heat resistance, and when it exceeds 10 parts by weight, it is difficult to control the polycondensation reaction.

It is also necessary to add an emulsifier or a mixture of emulsifiers to emulsify the foaming agent and to stabilize the foam. As the emulsifier, conventional anionic, cationic, and nonionic surfactants known in the art, or mixtures thereof, and the like may be used. As the emulsifier that may be used, at least one of alkyl phosphate, polyoxyethylene alkyl phosphate, alkyl sulfonate, polyoxyethylene alkyl aryl sulfite, polyoxyethylene alkyl sulfite, and sodium dodecylbenzene sulfonate, which are anionic surfactants, may be used. An amount of the emulsifier added may be 0.5 to 10 parts by weight, preferably 1 to 5 parts by weight, with respect to 100 parts by weight of the condensate. When the amount of the emulsifier added is less than 0.5 parts by weight, it is not easy to disperse the additive in the condensate, and when it exceeds 10 parts by weight, a rigidity of the formed foam increases and a compressive strength decreases.

For the preparation of foams from the dispersed solution according to the invention, the dispersed solution may include a foaming agent. Non-limiting examples of the foaming agent that may be used may include one or more of halogenated hydrocarbons such as trichloromonofluoromethane (F-11), trichlorotrifluoroethane (F-113), and dichlorotetrafluoroethane (F-114); furon (F-141b), pentane, n-heptane, cyclohexane, cyclopentane, and isopropyl ether solely or in combination. An amount of the foaming agent used may also depend on a desired density of the foam. The amount of the foaming agent added may be 0.5 to 20 parts by weight, preferably 5 to 15 parts by weight, with respect to 100 parts by weight of the condensate. When the amount of the foaming agent added is less than 0.5 parts by weight, it is difficult to form a foam using the condensate, and when it exceeds 20 parts by weight, a cell density of the foam prepared using the condensate is reduced, and there is a risk of lowering the heat resistance properties.

The curing agent is an acidic compound that serves as a catalyst for further condensation of the melamine resin. The applicable curing agent may be an inorganic acid, an organic acid, or a mixture thereof. For example, at least one of sulfuric acid, phosphoric acid, hydrochloric acid, formic acid, benzenesulfonic acid, toluenesulfonic acid, phenolsulfonic acid, and xylenesulfonic acid may be used. An amount of the curing agent added may be 0.2 to 10 parts by weight, preferably 0.5 to 5 parts by weight, with respect to 100 parts by weight of the condensate. When an amount of the curing agent added is less than 0.2 parts by weight, it is difficult to form a foam, and when it exceeds 5 parts by weight, a thickness of the foam cell increases and mechanical properties such as elasticity may decrease.

The present invention may optionally further include at least one additive commonly used in the art within a range that does not impair the intrinsic properties of the aforementioned dispersion. Examples of additives the applicable additive may include, but are not limited to, water repellents, dyes, flame retardants, UV stabilizers, agents for reducing combustion gas toxicity or promoting carbonization, and the like. An amount of the additive used is not particularly limited and may be appropriately adjusted within a range known in the art.

For a specific example of step S30, after preparing a dispersed solution in which the non-cured melamine-formaldehyde-based compound obtained in step S20 described above; isosorbide; a condensing agent, an emulsifier, a foaming agent and a curing agent are added and dispersed, the dispersed solution is irradiated with a high frequency wave to form a foam, and is then stabilized through a drying process of post-aging.

The high-frequency wave irradiation may be appropriately controlled within conditions known in the art for forming a foam. For example, using the dispersed solution, a high frequency wave having a frequency in a range of 0.95 to 3.0 GHz per 1 g of the dispersed solution at a temperature of 50 to 210°C may be irradiated with an output of 1 to 25 KW to form a foam. In addition, the drying process is not particularly limited, and for example, the foam may be stabilized by post-aging at 70 to 120°C for 0.5 to 6 hours.

Through the above-described process, a melamine foam is obtained from which the foaming agent, water and formaldehyde are substantially removed.

The thermoformable melamine foam of the present invention and its modifications described above may be applied as a sound-absorbing material for an engine room of an automobile, a material having various lightweight and excellent sound-absorbing properties in the interior. In addition, it may be applied without limitation to various fields requiring excellent sound absorption and heat resistance. Specific examples may include: thermal insulation and sound proofing of buildings and parts of buildings, in particular partitions, roofs, facades, doors and floors; internal insulation and sound proofing of engine parts, automobiles, airplanes, and the like; for example, it may be applied for low-temperature insulation of cooling rooms, oil tanks and liquefied gas containers. It may also be used as barrier cladding and blocking and shock absorbing packaging materials. Not limited to the above-mentioned uses, the thermoformable melamine foam of the present invention is applicable to all fields where foam is required.

Hereinafter, the present invention will be described in more detail through embodiments. However, the following embodiments are provided to help the understanding of the present invention, and the scope of the present invention is not limited to the examples in any sense.

[Embodiment 1. Preparation of melamine-formaldehyde condensate and foam (mole ratio 1.5)]

126 g (30 parts by weight) of melamine, 122 g (28 parts by weight) of a 37 % aqueous formaldehyde solution, and 180 g (42 parts by weight) of water were added and heated to 80°C to prepare a mixture (solid content of the first step: 40 weight %). Then, when a color of the mixture became transparent, 0.5 g of 5N NaOH was added, and then water was removed by vacuum pressure of 700 to 760 mmHg. When an amount of removed water reached about 180 to 200 g, the vacuum was released and the reaction was terminated, to prepare a melamine-formaldehyde condensate in which melamine was dissolved (solid content of the second step: 74 wt%). A viscosity of the condensate was 3,000 cPs, and the pH was 8.5.

After adding 2 parts by weight of sodium dodecylbenzene sulfonate surfactant, 5 parts by weight of sodium formate, 10 parts by weight of a foaming agent (n-Pentane), and 5 parts by weight of a curing agent (formic acid) to the melamine-formaldehyde condensate prepared as above and mixing them, 200 g of the mixture was put into a square mold made of polypropylene (PP). Thereafter, the mixture was irradiated with a 2 KW microwave of 2.45GHz frequency for 5 minutes, and a melamine foam was prepared through an M/W oven.

[Embodiment 2. Preparation of melamine-formaldehyde condensate and foam (mole ratio 1.5)]

A melamine foam in Embodiment 2 was prepared in the same manner as in Embodiment 1 except that 1 part weight of 70 % isosorbide was added when the foam was prepared using the prepared melamine-formaldehyde condensate (solid content in the second step: 74 wt%). In such a case, a viscosity of the condensate was 2,850 cPs, and the pH was 8.8.

[Comparative Example 1. Preparation of melamine-formaldehyde condensate and foam (mole ratio 1.25)]

After adding 126 g of melamine, 101 g of 37 % aqueous formaldehyde solution, and 180 g of water, the mixture (solid content of the first step: 40 wt%) was prepared at each temperature from 70 to 90°C, but it was difficult to prepare a melamine resin in which melamine was completely dissolved, and the foam was not properly formed during foam forming.

[Comparative Example 2. Preparation of melamine-formaldehyde condensate and foam (mole ratio 1.9)]

126 g of melamine, 153 g of 37 % aqueous formaldehyde solution, and 180 g of water were added, and then a melamine-formaldehyde condensate (solid content: 74 wt%) was prepared in the same manner as in Embodiment 1. In such a case, a viscosity of the condensate was 2,800 cPs, and a pH was 8.7.
A melamine foam of Comparative Example 2 was prepared in the same manner as in Embodiment 1 using the prepared melamine-formaldehyde condensate.

[Comparative Example 3. Preparation of melamine-formaldehyde condensate and foam (mole ratio 2.3)]

126 g of melamine, 98 g of 37 % aqueous formaldehyde solution, and 35 g of 92 % paraformaldehyde were added and mixed to prepare a melamine-formaldehyde condensate (solid content: 73 wt%) completely dissolved at 80°C.
A melamine foam of Comparative Example 3 was prepared in the same manner as in Embodiment 1 using the prepared melamine-formaldehyde condensate.

[Experimental Example 1. Evaluation of foam properties]

Using the melamine foams prepared in Embodiments 1 to 2 and Comparative Examples 1 to 3, physical properties were measured in the following manner, and the results are shown in Table 1 below.

(1) Crack measurement

The prepared melamine foam was inserted into a curved forming mold, and after forming at a pressure of 7 MPa for 1 minute by hot press at 210°C., degree of tearing at a bending portion during forming was visually confirmed. A shape of the forming mold used in such a case is shown in FIG. 2 below.

(2) Measurement of formaldehyde content

A content of formaldehyde in the foam was measured according to the KS K ISO 14184-1 test standard [Textile - Measurement of formaldehyde - Part 1: free and hydrolyzed formaldehyde (distilled water extraction method)].

(3) Tensile strength measurement

It was measured according to the KS M 6518 dumbbell No. 2 test standard.

(4) Measurement of tensile strength retention rate (heat aging property) after heat aging

After drying and aging in a hot air oven at 260°C for 5 hours, six KS M 6518 No. 2 dumbbell-type specimens were randomly taken and a tensile strength was measured at a tensile rate of 200 mm/min. In such a case, the tensile strength retention rate (%) after heat aging was calculated by Equation 1 below.

[Equation 1]

Tensile strength retention rate after heat aging (%) = (tensile strength after aging)

/ (tensile strength before aging) × 100

(5) Elongation rate measurement

It was measured according to the test standard of KS M 6518 Dumbbell No.2.

[Table 1]

| Evaluation criteria | Embodiment 1 | Embodiment 2 | Comp. Ex. 1 | Comp. Ex. 2 | Comp. Ex. 3 |
|---|---|---|---|---|---|
| Mole ratio of melamine : formaldehyde | 1 : 1.5 | 1 : 1.5 | 1 : 1.25 | 1 : 1.9 | 1 : 2.3 |
| Isosorbide (parts by weight) | - | 1 | - | - | - |
| Crack | Good | Good | - | Good | Good |
| Content of formaldehyde (mg/kg) | 430 | 370 | - | 830 | 2500 |
| Tensile strength (kPa) | 60 | 59 | - | 56 | 130 |
| Tensile strength retention (%) | 15% | 85% | - | 16% | 20% |
| Elongation(%) | 21% | 22% | - | 26% | 28% |

As shown in Table 1, Comparative Examples 1 to 3 which are out of the mole ratio of melamine and formaldehyde of the present invention did not meet the required physical properties of the melamine foam. Specifically, in the case of Comparative Example 1, melamine was not completely dissolved when preparing the melamine-formaldehyde condensate, so it was impossible to prepare an elastic melamine-formaldehyde foam. In addition, in the case of Comparative Examples 2 to 3, it was found that the content of formaldehyde in the foam was increased by at least 2 times and at most 6 times or more because the mole ratio of formaldehyde in the condensate was relatively high.

In contrast, it was found that the melamine foam of the present invention has a low mole ratio of melamine and formaldehyde, and thus the content of formaldehyde is low, and all of the physical properties of the final prepared foam are excellent (see Table 1 above). In particular, when preparing a foam using the melamine-formaldehyde condensate, Embodiment 2 in which isosorbide was added had a lowest formaldehyde content and a highest tensile strength retention after heat aging, and accordingly, it was confirmed that excellent heat resistance was achieved.

[Experimental Example 2. Evaluation of solubility of condensate according to solid content control]

When preparing the melamine-formaldehyde condensate, physical properties of the melamine foam according to the two-step classification of the preparing process and the solid content control at each step were evaluated as follows.

In such a case, the degree of dissolution of melamine was visually confirmed through an optical microscope (X500 magnification). In addition, each physical property evaluation method of the foam and its conditions are the same as in Table 1 above.

[Table 2]

| Sample evaluation criteria | | Embodiment 1 | Sample 1 | Sample 2 | Sample 3 |
|---|---|---|---|---|---|
| Mole ratio of melamine : formaldehyde | | 1 : 1.5 | 1 : 1.5 | 1 : 1.5 | 1 : 1.5 |
| Preparing process classification | Solid content of the first stage (wt%) <melamine dissolution step > | 40 | 74 | 40 | 40 |
| | Solid content of the second stage (wt%) <Step of preparing melamine-formaldehyde condensate > | 74 | | 60 | 81 |
| Degree of melamine dissolution | | Dissolution completed | Not dissolved | Dissolution completed | Dissolution completed |
| Crack | | Good | - | Good | Tear |
| Tensile strength (kPa) | | 60 | - | 20 | 70 |
| Elongation(%) | | 21% | - | 20% | 11% |

As shown in Table 2, in a case where it has the same mole ratio as in Embodiment 1, but a melamine-formaldehyde condensate is prepared by a single preparing process (Sample 1), dissolution of melamine is not completely achieved, so that the foam was nor properly prepared. In addition, in a case where the preparing of the melamine-formaldehyde condensate was classified into two steps, but the solid content of each step could not be controlled within a predetermined range (Samples 2-3), the melamine was completely dissolved, while poor physical properties in terms of cracks, tensile strength and elongation properties of the prepared melamine foam were exhibited.

[Experimental Example 3. Evaluation of the physical properties of the foam according to the change in isosorbide content (1)]

When the thermoformable foam was prepared using the melamine-formaldehyde condensate, the physical properties of the foam were evaluated according to an amount of isosorbide added.

In such a case, the amount of isosorbide added was changed to 0 phr, 1 phr, and 5 phr, respectively, and the results are shown in FIG. 1 below.

As a result of the experiment, it was found that when a predetermined amount of isosorbide was added, the weight loss of the foam according to the temperature increase was relatively small, and thus had more improved heat resistance (see FIG. 1 below).

[Experimental Example 4. Evaluation of heat resistance of foam according to isosorbide content change (2)]

When the thermoformable foam was prepared using the melamine-formaldehyde condensate, the physical properties of the foam according to the amount of isosorbide added were evaluated as follows. In such a case, the amount of isosorbide added was 1 part by weight, 3 parts by weight, and 5 parts by weight, respectively, to prepare a foam, and the results are shown in Table 3 below.

Here, each physical property evaluation method of the foam and its conditions are the same as in Table 1 above.

[Table 3]

| Sample evaluation criteria | Sample 4 | Sample 5 | Sample 6 | Sample 7 |
|---|---|---|---|---|
| Mole ratio of melamine : formaldehyde | 1 : 2.3 | 1 : 2.3 | 1 : 2.3 | 1 : 2.3 |
| Solid content of condensate (wt%) | 73 | 73 | 73 | 73 |
| Isosorbide input amount (parts by weigh) | - | 1 | 3 | 5 |
| Tensile strength after aging (%) | 20% | 35% | 70% | 75% |

As shown in Table 3, when isosorbide was not added, the tensile strength retention after heat aging was about 20 %. On the other hand, when isosorbide was added, the tensile strength retention rate after heat aging significantly increased as the input amount of isosorbide increased. Accordingly, it was confirmed that the heat resistance of the foam was improved according to the addition of isosorbide.

**Claims**

1. A thermoformable melamine foam comprising:

   a melamine-formaldehyde-based compound condensate,
   wherein a content of the formaldehyde is less than 460 mg/kg,
   a tensile strength before aging measured according to KS M 6518 is 55 kPa or more, and a tensile strength retention rate after aging measured after drying at 260°C for 5 hours is 15 % or more, and
   an elongation rate measured according to KS M 6518 is 20 % or more.

2. The thermoformable melamine foam of claim 1, wherein a mole ratio of the melamine and the formaldehyde-based compound in the condensate is in a range of 1 : 1.3 to 1.8, and a solid content of the condensate is in a range of 70 to 80 wt%.

3. The thermoformable melamine foam of claim 1, further comprising isosorbide.

4. The thermoformable melamine foam of claim 3, wherein the isosorbide is dispersed in the melamine-formaldehyde-based compound condensate.

5. The thermoformable melamine foam of claim 3, wherein a content of the isosorbide is in a range of 0.5 to 10 parts by weight with respect to a total weight of the condensate.

6. The thermoformable melamine foam of claim 3, wherein the foam has a tensile strength retention rate after aging of more than 20 % measured according to KS M 6518 after drying at 260°C for 5 hours.

7. The thermoformable melamine foam of claim 1, wherein the formaldehyde-based compound comprises at least one of formalin, paraformaldehyde, 1,3,5-trioxane, 1,3,5,7-tetroxocan, an oligomeric formaldehyde thereof and a polymeric formaldehyde thereof.

8. A method of preparing the thermoformable melamine foam of claim 1, the method comprising:

(a) a first step of preparing a mixture having a solid content adjusted to a range of 30 to 50 wt% by mixing melamine, a formaldehyde-based compound and water;
(b) a second step of preparing a melamine-formaldehyde condensate having a solid content adjusted to a range of 70 to 80 wt% by adding a basic catalyst to the mixture and then removing water; and
(c) a third step of forming and curing a dispersed solution in which the melamine-formaldehyde condensate; and at least one of a condensing agent, an emulsifier, a foaming agent and a curing agent is added.

9. The method of claim 8, wherein the dispersed solution in the step (c) comprises isosorbide.

10. The method of claim 9, wherein the isosorbide is added in an amount ranging from 0.5 to 10 parts by weight with respect to a total weight of the condensate.

11. A thermoformable melamine foam comprising:

a melamine-formaldehyde-based compound condensate; and
isosorbide.

12. The thermoformable melamine foam of claim 11, wherein a tensile strength before aging measured according to KS M 6518 is 55 kPa or more, and a tensile strength retention rate after aging measured after drying at 260°C for 5 hours is more than 20 %.

FIG. 1

FIG. 2

<div align="center">**INTERNATIONAL SEARCH REPORT**</div>

| | International application No. |
|---|---|
| | **PCT/KR2020/009481** |

**A. CLASSIFICATION OF SUBJECT MATTER**

**C08J 9/00**(2006.01)i; **C08L 61/28**(2006.01)i; **C08K 5/1539**(2006.01)i; **C08G 12/26**(2006.01)i

According to International Patent Classification (IPC) or to both national classification and IPC

**B. FIELDS SEARCHED**

Minimum documentation searched (classification system followed by classification symbols)

C08J 9/00; B29C 43/00; C08G 12/32; C08J 9/04; C08J 9/14; C08J 9/22; C08L 61/28; C08K 5/1539; C08G 12/26

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 멜라민(melamine), 발포체(foam), 포름알데히드(formaldehyde), 이소소비드 (isosorbide)

**C. DOCUMENTS CONSIDERED TO BE RELEVANT**

| Category* | Citation of document, with indication, where appropriate, of the relevant passages | Relevant to claim No. |
|---|---|---|
| X | KR 10-2012-0129135 A (DONGSUNG CHEMICAL CO., LTD. et al.) 28 November 2012. See claims 1-4; paragraphs [0016]-[0046], and table 1. | 1-2,7-8 |
| Y | | 3-6,9-12 |
| Y | SHIN, S.-R. et al. Effects of Isosorbide Incorporation into Flexible Polyurethane Foams: Reversible Urethane Linkages and Antioxidant Activity. Molecules. 05 April 2019, vol. 24, no. 7, article no. 1347, inner pp. 1-19. See abstract; and inner page 14. | 3-6,9-12 |
| A | KR 10-2008-0026605 A (BASF SE) 25 March 2008. See entire document. | 1-12 |
| A | JP 2018-162407 A (AICA KOGYO CO., LTD.) 18 October 2018. See entire document. | 1-12 |
| A | KR 10-2013-0073907 A (BASF SE) 03 July 2013. See entire document. | 1-12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 November 2020** | **13 November 2020** |

| Name and mailing address of the ISA/KR | Authorized officer |
|---|---|
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/009481**

| Patent document cited in search report | | | Publication date (day/month/year) | Patent family member(s) | | | Publication date (day/month/year) |
|---|---|---|---|---|---|---|---|
| KR | 10-2012-0129135 | A | 28 November 2012 | KR | 10-1287392 | B1 | 19 July 2013 |
| KR | 10-2008-0026605 | A | 25 March 2008 | CN | 101198646 | A | 11 June 2008 |
| | | | | CN | 101198646 | B | 02 March 2011 |
| | | | | EP | 1893674 | A1 | 05 March 2008 |
| | | | | EP | 1893674 | B1 | 14 August 2013 |
| | | | | JP | 2008-544005 | A | 04 December 2008 |
| | | | | JP | 5284085 | B2 | 11 September 2013 |
| | | | | US | 2008-0197524 | A1 | 21 August 2008 |
| | | | | WO | 2006-134083 | A1 | 21 December 2006 |
| JP | 2018-162407 | A | 18 October 2018 | None | | | |
| KR | 10-2013-0073907 | A | 03 July 2013 | CN | 102858857 | A | 02 January 2013 |
| | | | | CN | 102858857 | B | 26 November 2014 |
| | | | | EP | 2563849 | A1 | 06 March 2013 |
| | | | | EP | 2563849 | B1 | 05 November 2014 |
| | | | | JP | 5815674 | B2 | 17 November 2015 |
| | | | | JP | 2013-525553 | A | 20 June 2013 |
| | | | | WO | 2011-134778 | A1 | 03 November 2011 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 355760 A, Houben-Weyl